# EUROPEAN PATENT APPLICATION

(11) **EP 4 455 751 A1**
(43) Date of publication of application: **30.10.2024**
(21) Application number: 22911428.5
(22) Date of filing: 23.12.2022
(51) Int. Cl.: G02B 6/44

(54) **OPTICAL CABLE AND METHOD FOR MANUFACTURING OPTICAL CABLE**

(30) Priority: 24.12.2021 JP 2021210965
(71) Applicant: SUMITOMO ELECTRIC INDUSTRIES, LTD., Osaka-shi, Osaka 541-0041 (JP)
(72) Inventor: SUZUKI Yohei, Osaka-shi, Osaka 541-0041 (JP); SATO Fumiaki, Osaka-shi, Osaka 541-0041 (JP)
(74) Representative: TBK
(86) International application number: PCT/JP2022/047758
(87) International publication number: WO 2023/120727

(57) **Abstract**

A slotless type optical cable (1) comprising: a plurality of optical fiber units (2), each composed of a plurality of coated optical fibers (10); and a cable outer jacket (4) covering the plurality of optical fiber units (2). The plurality of optical fiber units (2) are twisted together along a longitudinal direction of the optical cable, and the twist rate of twisting the plurality of optical fiber units (2) together is at least partly 0.0014 (rad/mm) or greater.

## Description

### TECHNICAL FIELD

The present disclosure relates to an optical cable and a method for manufacturing the optical cable.

### BACKGROUND ART

For example, Patent Literature 1 discloses a unidirectional stranded slot-less optical cable in which polarization mode dispersion (PMD) is reduced. Patent Literature 2 discloses an SZ-stranded slot-less optical cable in which PMD is reduced. In Patent Literatures 1 and 2, PMD is reduced by setting a twist ratio of a strand, which is a twist amount per unit length of a strand of an optical fiber, to a certain value or more.

### CITATION LIST

### PATENT LITERATURE

Patent Literature 1: JP2007-226051A
Patent Literature 2: JP2002-122762A

### SUMMARY OF INVENTION

A slot-less optical cable including:
a plurality of optical fiber units each including a plurality of optical fibers; and
a cable sheath covering the plurality of optical fiber units,
in which the plurality of optical fiber units are stranded together along a longitudinal direction of the optical cable, and
a twist ratio of the stranding of the plurality of optical fiber units is at least partially 0.0014 (rad/mm) or more.

A method for manufacturing a slot-less optical cable that includes a plurality of optical fiber units each including a plurality of optical fibers, and a cable sheath covering the plurality of optical fiber units, the method including:
a step of stranding the plurality of optical fiber units along a longitudinal direction of the optical cable; and
a step of covering the plurality of optical fiber units with the cable sheath,
in which in the step of stranding, a twist ratio of the stranding of the plurality of optical fiber units is at least partially set to 0.0014 (rad/mm) or more.

### BRIEF DESCRIPTION OF DRAWINGS

[FIG. 1] FIG. 1 is a cross-sectional view, in a direction orthogonal to an axis, of an optical cable according to the present embodiment.
[FIG. 2] FIG. 2 is a partially exploded view showing one optical fiber ribbon in a longitudinal direction.
[FIG. 3] FIG. 3 is a schematic view showing a configuration of an optical fiber unit in which a ribbon is not stranded back.
[FIG. 4] FIG. 4 is a schematic view showing a configuration of an optical fiber unit in which a ribbon is stranded back.

### DESCRIPTION OF EMBODIMENTS

### [Technical Problem]

In a slot-less optical cable formed by stranding a plurality of optical fibers, in a case where the plurality of optical fibers are in a form of an optical fiber ribbon, when a twist ratio of the strand of the optical fibers is large, a bending tendency of a ribbon increases, and there is a concern that melting workability decreases. In Patent Literature 1, it is preferable that the twist ratio of the strand is 0.0104 (rad/mm) or more. However, when the twist ratio is too large, there is a possibility that the melting workability is deteriorated.

An object of the present disclosure is to provide an optical cable and a method for manufacturing the optical cable, which are capable of reducing PMD to a low level without deteriorating melting workability.

### [Advantageous Effects of Present Disclosure]

According to the present disclosure, it is possible to provide an optical cable and a method for manufacturing the optical cable, which are capable of reducing PMD to a low level without deteriorating melting workability.

### [Description of Embodiments of Present Invention]

An overview of an embodiment of the present disclosure will be described.
(1) A slot-less optical cable includes:
   a plurality of optical fiber units each including a plurality of optical fibers; and
   a cable sheath covering the plurality of optical fiber units, in which
   the plurality of optical fiber units are stranded together along a longitudinal direction of the optical cable, and
   a twist ratio of the stranding of the plurality of optical fiber units is at least partially 0.0014 (rad/mm) or more.

According to the above configuration, when the twist ratio of the stranding of the plurality of optical fiber units is at least partially set to 0.0014 (rad/mm) or more, PMD of the optical cable can be reduced to 0.1 ps/km^{1/2} or less without being greatly twisted. In addition, with such a degree of the twist ratio, a bending tendency of the plurality of optical fibers increases, and thus melting workability does not decrease.

The twist ratio is a maximum value of a twist amount per unit length of the optical fiber unit, and is, for example, a maximum value (maximum angle) when a twist amount (angle) of the unit is measured every 1 cm by peeling off a sheath in a range of 1 m.

(2) In the optical cable according to item (1), the plurality of optical fibers include optical fibers having an outer diameter of 220 µm or less, and the plurality of optical fibers form an optical fiber ribbon with fiber adhesive parts and non-adhesive parts in which, a coupling portion and a non-coupling portion are intermittently provided in the longitudinal direction in a state where the plurality of optical fibers are arranged in parallel in a direction orthogonal to the longitudinal direction, the coupling portion being a state where adjacent optical fibers of some or all of the plurality of optical fibers are coupled, the non-coupling portion being a state where the adjacent optical fibers are not coupled.

According to the above configuration, even when the plurality of optical fibers are accommodated at a high density, an increase in transmission loss is unlikely to occur, and when the optical fibers are taken out, a single fiber separation operation is easily performed.

(3) In the optical cable according to item (1) or (2), an upper limit value of the twist ratio is 0.0100 (rad/mm) or less.

According to the above configuration, it is possible to prevent a decrease in melting workability due to an increase in the bending tendency of the plurality of optical fibers.

(4) In the optical cable according to item (3), the plurality of optical fiber units are stranded back in the stranding direction.

According to the above configuration, it is possible to eliminate the twist of each optical fiber occurring when the plurality of optical fiber units are stranded.

(5) In a method for manufacturing a slot-less optical cable that includes a plurality of optical fiber units each including a plurality of optical fibers, and a cable sheath covering the plurality of optical fiber units, the method includes:
a step of stranding the plurality of optical fiber units along a longitudinal direction of the optical cable; and
a step of covering the plurality of optical fiber units with the cable sheath,
in the step of stranding, a twist ratio of the stranding of the plurality of optical fiber units is at least partially set to 0.0014 (rad/mm) or more.

According to the above method, in the step of stranding the plurality of optical fiber units, the twist ratio of the stranding of the plurality of optical fiber units is at least partially set to 0.0014 (rad/mm) or more, and thus it is possible to manufacture an optical cable in which PMD is reduced to 0.1 ps/km^{1/2} or less.

(6) In the method for manufacturing an optical cable according to item (5), in the step of stranding, an upper limit value of the twist ratio is set to 0.0100 (rad/mm) or less.

According to the above method, it is possible to manufacture an optical cable that reduces a decrease in melting workability due to an increase in the bending tendency of the plurality of optical fibers.

(7) In the method for manufacturing an optical cable according to any one of items (1) to (6), the step of stranding includes a step of stranding back the plurality of optical fiber units in the stranding direction.

According to the above method, it is possible to manufacture an optical cable in which the twist of each optical fiber occurring when the plurality of optical fiber units are stranded is eliminated.

### [Details of Embodiment of Present Disclosure]

Hereinafter, an embodiment of the present disclosure will be described with reference to the drawings. Members having the same reference numerals as those members already described in description of the present embodiment will not be described for convenience of description. Dimensions of the members shown in the drawings are for convenience of description and may be different from actual dimensions of the members.

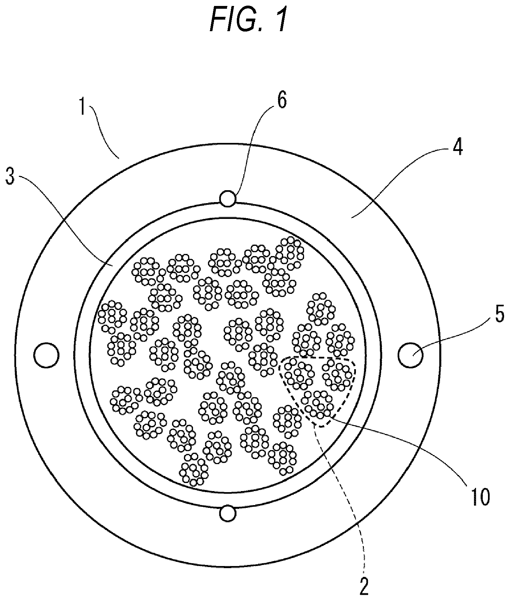

FIG. 1 is a cross-sectional view, in a direction orthogonal to an axis, of an optical cable 1 according to the present embodiment. As shown in FIG. 1, the optical cable 1 includes a plurality of optical fiber units 2, a water absorbing ribbon 3, a cable sheath 4, tensile strength members 5, and tear strings 6. The optical cable 1 is a so-called slot-less optical cable.

The optical fiber unit 2 includes a plurality of optical fibers. An outer diameter of glass fibers provided in the plurality of optical fibers is, for example, 125 µm. An outer diameter of the optical fiber is, for example, any one of 165 µm, 200 µm, 220 µm, and 250 µm.

The water absorbing ribbon 3 is wrapped around the entire periphery of the plurality of optical fiber units 2, for example, longitudinally or helically. The water absorbing ribbon 3 is, for example, a ribbon subjected to water absorption processing by applying a water absorption powder to a base fabric made of polyester or the like.

The cable sheath 4 covers the periphery of the water absorbing ribbon 3. The cable sheath 4 is made of, for example, a resin such as polyvinyl chloride (PVC) or polyethylene (PE), and is formed by extrusion-molding the resin on the plurality of optical fiber units 2 around which the water absorbing ribbon 3 is wound.

The tensile strength members 5 are embedded in the cable sheath 4. The tensile strength members 5 are made of fiber reinforced plastic (FRP) such as aramid FRP, glass FRP, or carbon FRP. The tensile strength members 5 may be formed of a liquid crystal polymer.

The tensile strength members 5 are formed in a circular shape, in a cross-sectional view. Two tensile strength members 5 are provided inside the cable sheath 4 along a longitudinal direction of the optical cable 1.

The tear strings 6 are for tearing the cable sheath 4, and is embedded in the cable sheath 4 along the longitudinal direction of the optical cable 1. In this example, two tear strings 6 are provided. The two tear strings 6 face each other at substantially intermediate positions of the two tensile strength members 5. By pulling out the tear strings 6, the cable sheath 4 is torn in the longitudinal direction, and the optical fiber unit 2 can be taken out. The tear strings 6 are made of, for example, a plastic material (for example, polyester) resistant to tension.

The plurality of optical fibers provided in the optical fiber unit 2 form a plurality of optical fiber ribbons 10. The plurality of optical fiber ribbons 10 are assembled in a bundled state or stranded state.

The optical fiber unit 2 may not be in the form of an optical fiber ribbon, and may be an assembly of single optical fibers.

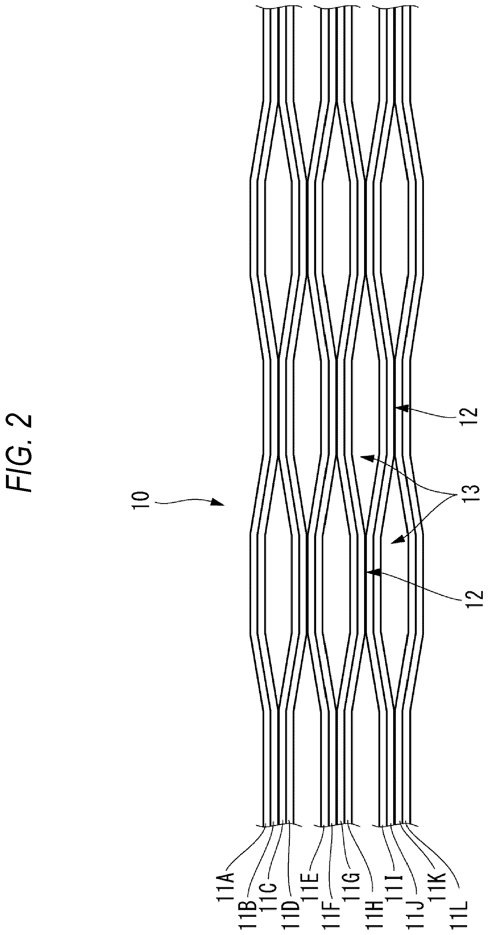

FIG. 2 is a partially exploded view showing one optical fiber ribbon 10 in the longitudinal direction. The optical fiber ribbon 10 is an optical fiber ribbon with fiber adhesive parts and non-adhesive parts in which, in a state where a plurality of optical fibers 11A to 11L are arranged in parallel, a coupling portion 12 in a state where adjacent optical fibers are coupled and a non-coupling portion 13 in a state where adjacent optical fibers are not coupled are intermittently provided in the longitudinal direction. As shown in FIG. 2, in the optical fiber ribbon 10, twelve optical fibers 11A to 11L are arranged in parallel, and the non-coupling portions 13 are not provided between the optical fibers 11A and 11B, 11C and 11D, 11E and 11F, 11G and 11H, 11I and 11J, and 11K and 11L. As described above, in the present embodiment, the coupling portion 12 and the non-coupling portion 13 are intermittently provided between some of the optical fibers (intermittent for every two fibers), but the coupling portion 12 and the non-coupling portion 13 may be intermittently provided between all of the optical fibers (intermittent for every one fiber).

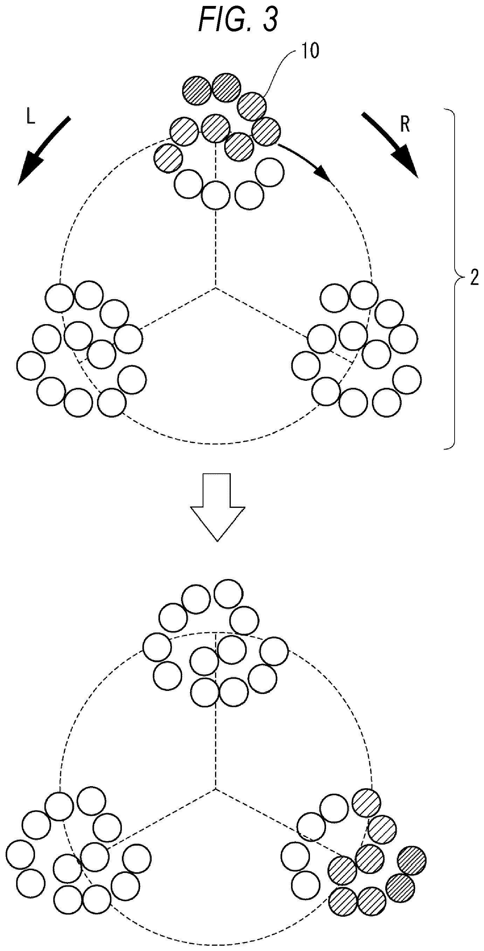

The optical fiber ribbons 10 in the optical fiber unit 2 may be stranded or may be stranded back. FIG. 3 is a schematic view showing a configuration in which the optical fiber ribbons 10 in the optical fiber unit 2 are stranded without the optical fiber ribbons 10 being stranded back. Although the optical cable 1 includes twelve optical fiber units 2, one of the twelve optical fiber units 2 is enlarged and shown in FIG. 3 for the sake of description. One optical fiber unit 2 is formed of three optical fiber ribbons 10 including twelve fibers. In order to make it easy to visually understand a strand angle of the optical fiber ribbon 10 described below, one of the three optical fiber ribbons 10 is shown in gradation in FIG. 3.

As shown in FIG. 3, the optical fiber ribbons 10 in the optical fiber unit 2 are stranded in a clockwise direction R along the longitudinal direction of the optical cable. At this time, since the optical fiber ribbon is not stranded back, when the optical fiber unit 2 shown in the upper part of FIG. 3 and the three optical fiber ribbons 10 are used as a reference, a strand angle of the optical fiber unit 2 shown in the lower part of FIG. 3 matches the strand angle of the three optical fiber ribbons 10. Although not shown in FIG. 3, the optical fiber ribbons 10 in the optical fiber unit 2 are stranded in a counterclockwise direction L by periodically reversing the stranding direction. That is, the optical fiber ribbons 10 in the optical fiber unit 2 are SZ-stranded.

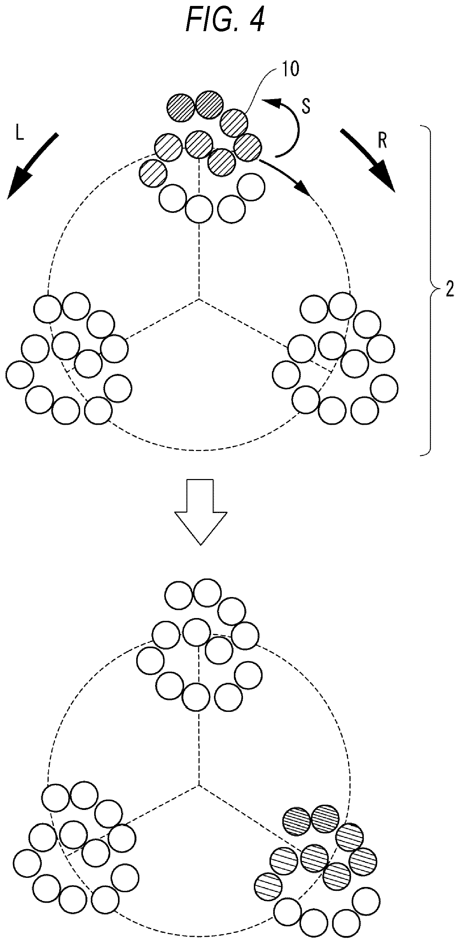

FIG. 4 is a schematic view showing a configuration in which the optical fiber ribbons 10 in the optical fiber unit 2 are stranded while the optical fiber ribbons are stranded back. FIG. 4 is an enlarged view of one of the twelve optical fiber units 2 as in FIG. 3. In order to make it easy to visually understand the strand angle of the optical fiber ribbons 10, one of the three optical fiber ribbons 10 is shown in gradation.

As shown in FIG. 4, in the optical fiber unit 2, the optical fiber ribbons 10 are stranded back in a counterclockwise direction S with respect to the stranding direction while being stranded in the clockwise direction R along the longitudinal direction of the optical cable 1. Here, "stranded back" means that the optical fiber ribbons 10 of the optical fiber unit 2 are twisted in a direction to eliminate the twist of each optical fiber ribbon 10 that occurs when the optical fiber ribbons 10 of the optical fiber unit 2 are stranded. That is, when the optical fiber unit 2 before being stranded and the three optical fiber ribbons 10 shown in the upper part of FIG. 4 are used as a reference, the strand angle of the three optical fiber ribbons 10 shown in the lower part of FIG. 4 is smaller than the strand angle of the optical fiber unit 2 by an angle at which the optical fiber ribbons 10 are stranded back. In the example of FIG. 4, a case of the strand back angle equivalent to the strand angle of the optical fiber unit 2 is shown, and a positional relationship of the three optical fiber ribbons 10 in the longitudinal direction of the cable changes, but the directions of the three optical fiber ribbons 10 do not change.

In the present embodiment, the twist ratio of the stranding of the plurality of optical fiber units 2 is at least partially 0.0014 (rad/mm) or more. Accordingly, the PMD of the optical cable can be reduced to 0.1 ps/km^{1/2} or less.

A method for manufacturing the optical cable according to the present embodiment will be described. The plurality of optical fiber units 2 are stranded while periodically reversing the stranding direction along the longitudinal direction of the optical cable. When the plurality of optical fiber units 2 are stranded, the twist ratio is at least partially set to 0.0014 (rad/mm) or more. Thereafter, the water absorbing ribbon 3 is longitudinally or helically wrapped around the periphery of the stranded plurality of optical fiber units 2, and the periphery thereof is covered with the cable sheath 4. In the stranding step, the twist ratio of the stranding of the plurality of optical fiber units 2 is at least partially set to 0.0014 (rad/mm) or more, and thus it is possible to manufacture an optical cable in which the PMD is reduced to 0.1 ps/km^{1/2} or less.

Further, in the step pf stranding, the twist ratio may be set to 0.0100 (rad/mm) or less. Accordingly, it is possible to manufacture the optical cable 1 that reduces a decrease in melting workability due to an increase in the bending tendency of the plurality of optical fibers.

The "0.0100 (rad/mm) or less" means that the upper limit value of the twist ratio is 0.0100 (rad/mm), and means that the twist ratio does not exceed 0.0100 (rad/mm) even in a part.

Table 1 shows evaluation results of the PMD of the optical cable 1 according to the present disclosure. In optical cable samples to be evaluated, an optical fiber having an outer diameter of 200 µm and an optical fiber ribbon with fiber adhesive parts and non-adhesive parts are used. In samples 1 to 5, a strand angle for each pitch between optical fiber units is changed to change a twist ratio.

In Table 1, "strand back of ribbon" indicates strand back of the optical fiber ribbon in the optical fiber unit, "stranding direction" indicates a stranding direction of the optical fiber units, and "twist ratio" indicates a twist ratio of the optical fiber units. The twist ratio is a twist ratio measured in a part of the optical cable 1. The SZ-stranding of the optical fiber ribbon in the optical fiber unit and the stranding back of the optical fiber units are performed in samples 1 to 5.

A plurality of optical cables of such samples are manufactured, the PMD is measured, and a maximum value of the PMD is shown in the table.

Even in the sample 5 without stranding back of the ribbon, similarly to the samples with stranding back, it is confirmed that the PMD is reduced to 0.1 ps/km^{1/2} or less by setting the twist ratio of the optical fiber units to 0.0014 (rad/mm) or more. However, since the twist occurs, when the twist ratio is too large, the melting workability may deteriorate. When the optical fiber units are spirally stranded, similarly to the case where the optical fiber units are SZ-stranded, it is expected that the PMD of the optical cable is reduced to 0.1 ps/km^{1/2} or less by setting the twist ratio to 0.0014 (rad/mm) or more.

**[Table 1]**

| Sample No. | Strand back of ribbon | Stranding direction | Twist ratio (rad/mm) | MAX PMD (ps/km^{1/2}) |
|---|---|---|---|---|
| 1 | Yes | SZ-strand | 0.0042 | 0.0815 |
| 2 | Yes | SZ-strand | 0.0028 | 0.0889 |
| 3 | Yes | SZ-strand | 0.0014 | 0.0987 |
| 4 | Yes | SZ-strand | 0.0010 | 0.1012 |
| 5 | No | SZ-strand | 0.0014 | 0.0971 |

As shown in Table 1, in a part of the optical cable 1, by setting the twist ratio of the stranding to 0.0014 (rad/mm) or more, the PMD of the optical cable 1 can be reduced to 0.1 ps/km^{1/2} or less. However, when the twist ratio is less than 0.0014 (rad/mm) in a part of the optical cable 1, the PMD cannot be set to 0.1 ps/km^{1/2} or less. When the twist ratio of the stranding is set to be larger than 0.0100 (rad/mm) in a part of the optical cable 1, the PMD is smaller, but the melting workability deteriorates. As described above, by setting the twist ratio of the stranding to 0.0100 (rad/mm) or less, it is possible to prevent a decrease in the melting workability due to an increase in the bending tendency of the plurality of optical fibers.

Although the embodiment of the present disclosure has been described above, it goes without saying that the technical scope of the present disclosure should not be interpreted to be limited by the description of the present embodiment. The present embodiment is merely an example, and it is understood by those skilled in the art that various modifications to the present embodiment can be made within the scope of the invention described in the claims. As described above, the technical scope of the present disclosure should be defined based on the scope of the invention described in the claims and the scope of equivalents thereof.

The present application claims priority based on Japanese Patent Application No. 2021-210965 filed on December 24, 2021, and incorporates all the contents described in the Japanese Application.

### REFERENCE SIGNS LIST

1: optical cable
2: optical fiber unit
3: water absorbing ribbon
4: cable sheath
5: tensile strength member
6: tear string
10: optical fiber ribbon
11A to 11L: optical fiber
12: coupling portion
13: non-coupling portion
R: clockwise direction
L: counterclockwise direction
S: counterclockwise direction

## Claims

1. A slot-less optical cable comprising:
a plurality of optical fiber units each including a plurality of optical fibers; and
a cable sheath covering the plurality of optical fiber units,
wherein the plurality of optical fiber units are stranded together along a longitudinal direction of the optical cable, and
a twist ratio of the stranding of the plurality of optical fiber units is at least partially 0.0014 (rad/mm) or more.

2. The optical cable according to claim 1,
wherein the plurality of optical fibers include optical fibers having an outer diameter of 220 µm or less, and
the plurality of optical fibers form an optical fiber ribbon with fiber adhesive parts and non-adhesive parts in which a coupling portion and a non-coupling portion are intermittently provided in the longitudinal direction in a state where the plurality of optical fibers are arranged in parallel in a direction orthogonal to the longitudinal direction, the coupling portion being a state where adjacent optical fibers of some or all of the plurality of optical fibers are coupled, the non-coupling portion being a state where the adjacent optical fibers are not coupled.

3. The optical cable according to claim 1 or 2,
wherein an upper limit value of the twist ratio is 0.0100 (rad/mm) or less.

4. The optical cable according to any one of claims 1 to 3,
wherein the plurality of optical fiber units are stranded back in the stranding direction.

5. A method for manufacturing a slot-less optical cable that includes a plurality of optical fiber units each including a plurality of optical fibers, and a cable sheath covering the plurality of optical fiber units, the method comprising:
a step of stranding the plurality of optical fiber units along a longitudinal direction of the optical cable; and
a step of covering the plurality of optical fiber units with the cable sheath,
wherein in the step of stranding, a twist ratio of the stranding of the plurality of optical fiber units is at least partially set to 0.0014 (rad/mm) or more.

6. The method for manufacturing an optical cable according to claim 5,
wherein in the step of stranding, an upper limit value of the twist ratio is set to 0.0100 (rad/mm) or less.

7. The method for manufacturing an optical cable according to claim 5 or 6,
wherein the step of stranding includes a step of stranding back the plurality of optical fiber units in the stranding direction.
